(19) Europäisches Patentamt
European Patent Office
Office européen des brevets

(11) **EP 4 592 727 A1**

(12) **EUROPEAN PATENT APPLICATION**
published in accordance with Art. 153(4) EPC

(43) Date of publication:
**30.07.2025 Bulletin 2025/31**

(21) Application number: 23873087.3

(22) Date of filing: **26.09.2023**

(51) International Patent Classification (IPC):
*G02B 13/00* (2006.01)   *G02B 3/00* (2006.01)
*G02B 17/02* (2006.01)   *G02B 7/09* (2021.01)
*G02B 5/08* (2006.01)   *G02B 9/60* (2006.01)
*G02B 3/02* (2006.01)

(52) Cooperative Patent Classification (CPC):
**G02B 3/00; G02B 3/02; G02B 5/08; G02B 7/09;
G02B 9/60; G02B 13/00; G02B 17/02**

(86) International application number:
**PCT/KR2023/014786**

(87) International publication number:
**WO 2024/071973 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022 KR 20220123032
13.10.2022 KR 20220131191**

(71) Applicant: **Samsung Electronics Co., Ltd.
Suwon-si, Gyeonggi-do 16677 (KR)**

(72) Inventor: **BAE, Jaecheol
Suwon-si Gyeonggi-do 16677 (KR)**

(74) Representative: **HGF
HGF Limited
1 City Walk
Leeds LS11 9DX (GB)**

(54) **LENS ASSEMBLY AND ELECTRONIC DEVICE COMPRISING SAME**

(57)     According to an embodiment of the present disclosure, a lens assembly may comprise: a plurality of lenses which are successively arranged toward an image sensor along an optical-axis direction; and at least two reflective surfaces which are arranged between the object-side surface of a first lens disposed farthest from the image sensor and the sensor-side surface of a lens disposed closest to the image sensor in the optical-axis direction. In an embodiment, the lens assembly may satisfy the following conditional expression for the Abbe number V1 of the first lens and the Abbe number V4 of a fourth lens that is the second lens from the image sensor: 28 <= V1-V4 <= 42. Various other embodiments may also be possible.

FIG. 5

**Description**

[Technical Field]

An embodiment(s) of the disclosure relates to a lens assembly, e.g., a lens assembly and an electronic device including the same.

[Background Art]

Optical devices, for example, cameras capable of capturing images or videos have been widely used, and digital cameras or video cameras with solid image sensors such as charge coupled device (CCD) or complementary metal-oxide semiconductor (CMOS) have recently become commonplace. solid image sensor (CCD or CMOS)-adopted optical devices may easily save, copy, or move images as compared with film-type optical devices.

Recently, a plurality of optical devices, e.g., two or more selected from a macro camera, a telephoto camera, and/or a wide-angle camera, are built in one electronic device to enhance the quality of shot images and give various visual effects to shot images. For example, it is possible to obtain images of an object with multiple cameras having different optical properties and synthesize the images to obtain a high-quality shot image. With the capability of capturing high-quality images with a plurality of optical devices (e.g., cameras) equipped, electronic devices, e.g., mobile communication terminals or smartphones, are replacing shooting-only electronic devices, such as digital compact cameras, and are expected to take place of high-end cameras, such as single-lens reflex digital (DSLR) cameras, in the future.

The above-described information may be provided as background for the purpose of helping understanding of the disclosure. No claim or determination is made as to whether any of the foregoing is applicable as background art in relation to the disclosure.

[Detailed Description of the Invention]

[Technical Solution]

According to an embodiment of the disclosure, a lens assembly may comprise a plurality of lenses sequentially aligned along an optical-axis direction toward an image sensor, and at least two reflective surfaces disposed between an object-side surface of a first lens disposed farthest from the image sensor and a sensor-side surface of a lens disposed closest to the image sensor, in the optical-axis direction. In an embodiment, the lens assembly may meet conditional equation 1 regarding an Abbe number V1 of the first lens and an Abbe number V4 of a lens disposed second from the image sensor:

$$[\text{conditional equation 1}]$$

$$28 <= V1\text{-}V4 <= 42.$$

According to an embodiment of the disclosure, an electronic device may comprise a lens assembly, an image sensor configured to receive light focused or guided by the lens assembly, and a processor configured to obtain a subject image based on the light received through the image sensor. In an embodiment, the lens assembly may include a first lens, a second lens, a third lens, a fourth lens, and a fifth lens sequentially aligned along an optical-axis direction toward the image sensor, a first reflective surface disposed between an object-side surface of the first lens and a sensor-side surface of the fifth lens in the optical-axis direction, and a second reflective surface disposed between the object-side surface of the first lens and the first reflective surface in the optical-axis direction. In an embodiment, the electronic device may meet conditional equation 2 regarding an Abbe number V1 of the first lens and an Abbe number V4 of the fourth lens:

$$[\text{conditional equation 2}]$$

$$28 <= V1\text{-}V4 <= 42.$$

[Brief Description of the Drawings]

The foregoing and other aspects, configurations, and/or advantages of an embodiment(s) of the disclosure will be more apparent from the following detailed description taken in conjunction with the accompanying drawings.

FIG. 1 is a block diagram illustrating an electronic device in a network environment according to an embodiment of the disclosure;

FIG. 2 is a block diagram illustrating a camera module according to an embodiment of the disclosure;

FIG. 3 is a front perspective view illustrating an electronic device according to an embodiment of the disclosure;

FIG. 4 is a perspective view illustrating a rear surface of the electronic device of FIG. 3 according to an embodiment of the disclosure;

FIG. 5 is a view illustrating a lens assembly according to an embodiment of the disclosure;

FIG. 6 is a view illustrating an example of an annular aperture in a lens assembly according to an embodiment of the disclosure;

FIG. 7 is a graph illustrating the spherical aberration of the lens assembly of FIG. 5 according to an embodiment of the disclosure;

FIG. 8 is a graph illustrating the astigmatism of the lens assembly of FIG. 5 according to an embodiment of the disclosure;

FIG. 9 is a graph illustrating the distortion ratio of the lens assembly of FIG. 5 according to an embodiment of the disclosure;

FIG. 10 is a view illustrating a lens assembly according to an embodiment of the disclosure;

FIG. 11 is a graph illustrating the spherical aberration of the lens assembly of FIG. 10 according to an embodiment of the disclosure;

FIG. 12 is a graph illustrating the astigmatism of the lens assembly of FIG. 10 according to an embodiment of the disclosure; and

FIG. 13 is a graph illustrating the distortion ratio of the lens assembly of FIG. 10 according to an embodiment of the disclosure.

Throughout the drawings, like reference numerals may be assigned to like parts, components, and/or structures.

[Mode for Carrying out the Invention]

One compact electronic device may include a standard camera, a wide-angle (or ultra wide-angle) camera, a macro camera, and/or a telephoto camera to obtain a plurality of images for one subject and synthesize them into a high-quality image. Cameras or lens assemblies may be classified as standard cameras, wide-angle (or ultra wide-angle cameras), macro cameras, and/or telephoto cameras depending on their angle of view. As portable electronic devices, such as smartphones, come equipped with displays large enough to provide a sufficiently large screen size, portability may be secured by reducing the thickness or weight of the electronic devices. A telephoto camera may have a relatively large focal length compared to a standard camera or a wide-angle camera, and may be implemented with a folded structure that refracts or reflects the path of light. For example, by including an optical member that refract or reflect the path of light, the lens assembly may provide good telephoto performance even in compact electronic devices. However, it may be difficult to implement a small, bright lens in a telephoto lens having a folded structure.

An embodiment(s) of the disclosure aims to address the foregoing issues and/or drawbacks and provide advantages described below, providing a lens assembly easy to downsize while providing good telephoto performance, and/or an electronic device including the same.

An embodiment(s) of the disclosure may provide a lens assembly that provides large-aperture telephoto performance suitable for high-resolution/large-sized image sensors while being easy to downsize, and/or an electronic device including the lens assembly.

Technical objects to be achieved herein are not limited to the foregoing technical objects, and other technical objects not mentioned may be clearly understood by those skilled in the art from the following description.

The following description taken in conjunction with the accompanying drawings may provide an understanding of various exemplary implementations of the disclosure, including claims and their equivalents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and brevity.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

The singular forms "a," "an," and "the" are intended to include the plural forms as well, unless the context clearly indicates otherwise. Thus, as an example, "a component surface" may be interpreted as including one or more of the surfaces of a component.

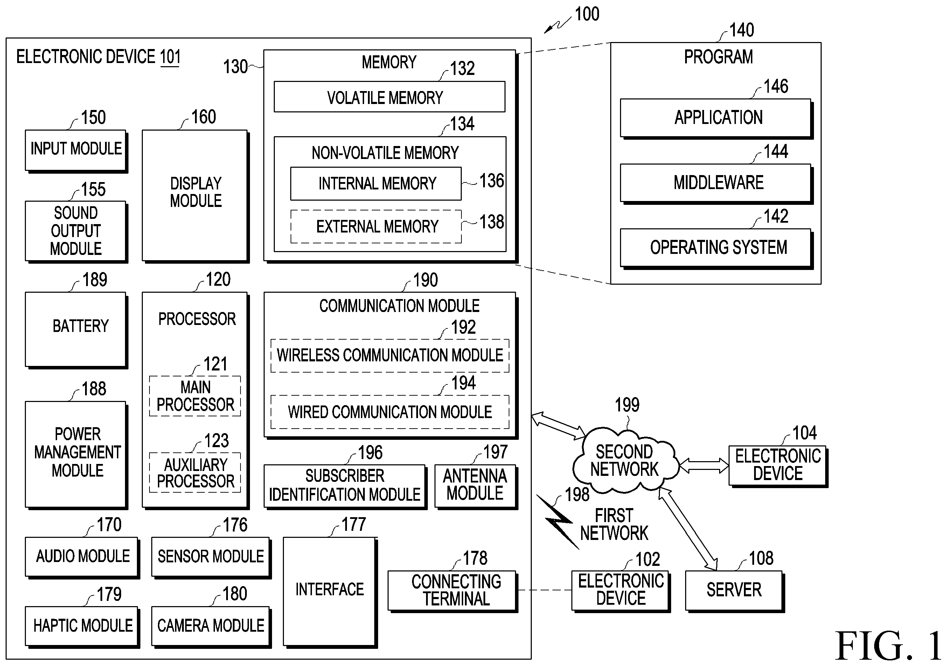

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

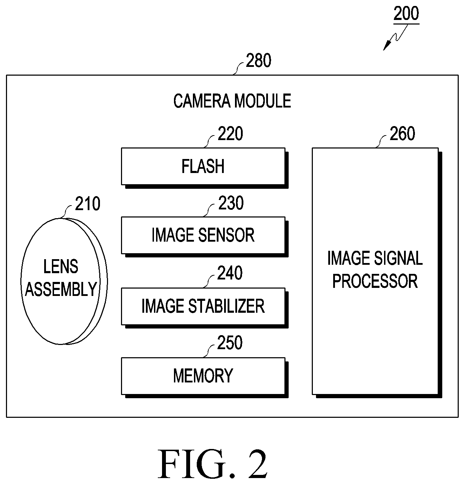

FIG. 2 is a block diagram 200 illustrating the camera module 280 (e.g., the camera module 180 of FIG. 1) according to an embodiment of the disclosure. Referring to FIG. 2, the camera module 280 may include a lens assembly 210, a flash 220, an image sensor 230, an image stabilizer 240, memory 250 (e.g., buffer memory), or an image signal processor 260. In an embodiment, the lens assembly 210 may include the image sensor 230. The lens assembly 210 may collect light emitted or reflected from an object whose image is to be taken. The lens assembly 210 may include one or more lenses. According to an embodiment, the camera module 280 may include a plurality of lens assemblies 210. In this case, the camera module 280 may form, e.g., a dual-camera, a 360-degree camera, or a spherical camera. Some of the plurality of lens assemblies 210 may have the same lens attribute (e.g., field of view, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, e.g., a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or the electronic device 201 including the camera module 180. This allows compensating for at least part of a negative effect (e.g., image blurring) by the movement on an image being captured. According to an embodiment, the image stabilizer 240 may sense such a movement by the camera module 280 or the electronic device (e.g., the electronic device 101 of FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory (e.g., the memory 130 of FIG. 1) or as a separate memory that is operated independently from the memory.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 of FIG. 1) outside the camera module 280. According to an embodiment, the image signal processor 260 may be configured as at least part of the processor (e.g., the processor 120 of FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device (e.g., the electronic device 101 of FIG. 1) may include a plurality of camera modules 280 having different attributes or functions. In such a case, at least one of the plurality of camera modules 280 may form, for example, a wide-angle camera and at least another of the plurality of camera modules may form a telephoto camera. Similarly, at least one of the plurality of camera modules 280 may be a front camera and at least another of the plurality of camera modules may be a rear camera.

The electronic device according to embodiment(s) of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment(s) of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities. Some of the plurality of entities may be separately disposed in different components. According to embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

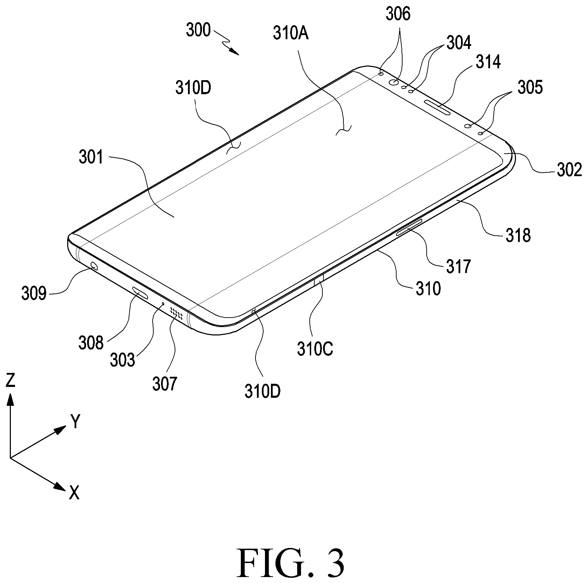

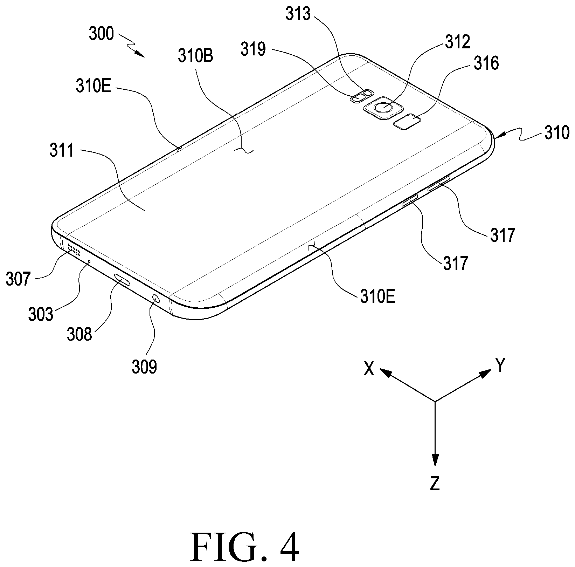

FIG. 3 is a front perspective view illustrating an electronic device 300 (e.g., the electronic device 101 of FIG. 1) according to an embodiment of the disclosure. FIG. 4 is a perspective view illustrating a rear surface of the electronic device 300 of FIG. 3 according to an embodiment of the disclosure.

Referring to FIGS. 3 and 4, according to an embodiment, an electronic device 300 (e.g., the electronic device 101 of FIG. 1) may include a housing 310 including a first surface (or front surface) 310A, a second surface (or rear surface) 310B, and a side surface 310C surrounding a space between the first surface 310A and the second surface 310B. According to an embodiment (not shown), the housing 310 may denote a structure forming part of the first surface 310A, the second surface 310B, and the side surface 310C of FIG. 3. According to an embodiment, the first surface 310A may be formed by a front plate 302 (e.g., a glass plate or polymer plate with various coat layers) at least part of which is substantially transparent. In an embodiment, the front plate 302 may be coupled with the housing 310 and, along with the housing 310, may form an internal space. In an embodiment, the 'internal space' may mean a space, as an internal space of the housing 310, for receiving at least part of the display module 160 of FIG. 1 or the display 301 described below.

According to an embodiment, the second surface 310B may be formed of a substantially opaque back plate 311. The rear plate 311 may be formed of, e.g., laminated or colored glass, ceramic, polymer, metal (e.g., aluminum, stainless steel (STS), or magnesium), or a combination of at least two thereof. The side surface 310C may be formed by a side bezel structure (or a "side member") 318 that couples to the front plate 302 and the rear plate 311 and includes a metal and/or polymer. In an embodiment, the rear plate 311 and the side bezel plate 318 may be integrally formed together and include the same material (e.g., a metal, such as aluminum).

In the embodiment illustrated, the front plate 302 may include two first regions 310D, which seamlessly and bendingly extend from the first surface 310A to the rear plate 311, on both the long edges of the front plate 302. In the embodiment (refer to FIG. 4) illustrated, the rear plate 311 may include two second regions 310E, which seamlessly and bendingly extend from the second surface 310B to the front plate, on both the long edges. In an embodiment, the front plate 302 (or the rear plate 311) may include only one of the first regions 310D (or the second regions 310E). In an embodiment, the first regions 310D or the second regions 301E may partially be excluded. In the above-described embodiments, at side view of the electronic device 300, the side bezel structure 318 may have a first thickness (or width) for sides (e.g., the side where the connector hole 308 is formed) that do not have the first regions 310D or the second regions 310E and a second thickness, which is smaller than the first thickness, for sides (e.g., the side where the key input device 317 is disposed) that have the first regions 310D or the second regions 310E.

According to an embodiment, the electronic device 300 may include at least one or more of a display 301, audio modules 303, 307, and 314, sensor modules 304, 316, and 319, camera modules 305, 312, and 313 (e.g., the camera module 180 or 280 of FIG. 1 or FIG. 2), key input devices 317, a light emitting device 306, and connector holes 308 and 309. In an embodiment, the electronic device 300 may exclude at least one (e.g., the key input device 317 or the light emitting device 306) of the components or may add other components.

The display 301 (e.g., the display module 160 of FIG. 1) may be visually exposed through a significant portion of the front plate 302. In an embodiment, at least a portion of the display 301 may be visually exposed through the front plate 302 forming the first surface 310A and the first regions 310D of the side surface 310C. In an embodiment, the edge of the display 301 may be formed to be substantially the same in shape as an adjacent outer edge of the front plate 302. In an embodiment (not illustrated), the interval between the outer edge of the display 301 and the outer edge of the front plate 302 may remain substantially even to give a larger area of visual exposure of the display 301.

In an embodiment (not shown), the screen display region (e.g., the active region), or a region (e.g., the inactive region) off the screen display region, of the display 301 may have a recess or opening in a portion thereof, and at least one or more of the audio module 314 (e.g., the audio module 170 of FIG. 1), sensor module 304 (e.g., the sensor module 176 of FIG. 1), camera module 305, and light emitting device 306 may be aligned with the recess or opening. In an embodiment (not shown), at least one or more of the audio module 314, sensor module 304, camera module 305 (e.g., an under display camera (UDC)), fingerprint sensor 316, and light emitting device 306 may be included on the rear surface of the screen display area of the display 301. In an embodiment (not illustrated), the display 301 may be disposed to be coupled with, or adjacent, a touch detecting circuit, a pressure sensor capable of measuring the strength (pressure) of touches, and/or a digitizer for detecting a magnetic field-type stylus pen. In an embodiment, at least part of the sensor modules 304 and 319 and/or at least part of the key input device 317 may be disposed in the first regions 310D and/or the second regions 310E.

The audio modules 303, 307, and 314 may include a microphone hole 303 and speaker holes 307 and 314. A microphone for acquiring external sounds may be disposed in the microphone hole 303. In an embodiment, a plurality of microphones may be disposed to detect the direction of the sound. The speaker holes 307 and 314 may include an external speaker hole 307 and a phone receiver hole 314. In an embodiment, the speaker holes 307 and 314 and the microphone hole 303 may be implemented as a single hole, or speakers may be rested without the speaker holes 307 and 314 (e.g., piezo speakers).

The sensor modules 304, 316, and 319 may generate an electrical signal or data value corresponding to an internal operating state or external environmental state of the electronic device 300. The sensor modules 304, 316, and 319 may include a first sensor module 304 (e.g., a proximity sensor) disposed on the first surface 310A of the housing 310, and/or a second sensor module (not shown) (e.g., a fingerprint sensor), and/or a third sensor module 319 (e.g., a heart-rate monitor (HRM) sensor) disposed on the second surface 310B of the housing 310, and/or a fourth sensor module 316 (e.g., a fingerprint sensor). The fingerprint sensor may be disposed on the second surface 310B as well as the first surface 310A (e.g., the display 301) of the housing 310. The electronic device 300 may include a sensor module not shown, e.g., at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The camera modules 305, 312, and 313 may include a first camera device 305 disposed on the first surface 310A of the electronic device 300, and a second camera device 312 and/or a flash 313 disposed on the second surface 310B. The camera modules 305 and 312 may include one or more lenses, an image sensor, and/or an image signal processor. The flash 313 may include, e.g., a light emitting diode (LED) or a xenon lamp. According to an embodiment, two or more lenses (an infrared (IR) camera, a wide-angle lens, and a telescopic lens) and image sensors may be disposed on one surface of the electronic device 300.

The key input device 317 may be disposed on the side surface 310C of the housing 310. In an embodiment, the electronic device 300 may exclude all or some of the above-mentioned key input devices 317 and the excluded key input devices 317 may be implemented in other forms, e.g., as soft keys, on the display 301. In an embodiment, the key input device may include the sensor module 316 disposed on the second surface 310B of the housing 310.

The light emitting device 306 may be disposed on, e.g., the first surface 310A of the housing 310. The light emitting device 306 may provide, e.g., information about the state of the electronic device 300 in the form of light. In an embodiment, the light emitting device 306 may provide a light source that interacts with, e.g., the camera module 305. The light emitting device 306 may include, e.g., a light emitting diode (LED), an infrared (IR) LED, or a xenon lamp.

The connector holes 308 and 309 may include a first connector hole 308 for receiving a connector (e.g., a universal serial bus (USB) connector) for transmitting or receiving power and/or data to/from an external electronic device and/or a second connector hole 309 (e.g., an earphone jack) for receiving a connector for transmitting or receiving audio signals to/from the external electronic device.

In an embodiment(s) of the disclosure, the reference numbers for the lenses of the lens assemblies 400 and 500 to be described below are omitted from the drawings, but may be sequentially referred to as an 'nth lens' (where 'n' is a natural number) from the lens farthest from the image sensor. For example, the lens farthest from the image sensor may be understood as the first lens L1. When the lens assembly 400 or 500 includes m lenses, the 'mth lens Lm' (where 'm' is a natural number) may be understood as a lens disposed closest to the image sensor among the m lenses. In the reference numbers of the drawings, 'LnS1' may refer to the object-side surface of the nth lens, and 'LnS2' may refer to the sensor-side surface of the nth lens. In an embodiment, the lens assembly 400 or 500 may include at least one reflective surface disposed between the object-side surface of the first lens L1 and the sensor-side surface of the lens (e.g., the fifth lens L5) closest to the image sensor. In an embodiment, the at least one reflective surface may include a reflective area disposed in a partial area of the object-side surface or the sensor-side surface of any one of the lenses. For example, a portion of the object- or sensor-side surface of any one of the lenses may reflect light, and the rest of the object- or sensor-side surface of the lens may transmit light. In an embodiment to be described below, at least one reflective surface may be given a reference number 'RnS1' or 'RnS2', which may be understood as the reflective surface (or the reflective area) is disposed on the object-side surface of the nth lens or the sensor-side surface of the nth lens. In the following description of embodiment(s) of the disclosure, when the reflective surface is implemented in a portion of the lens surface, the reflective surface may be referred to as a 'reflective area'.

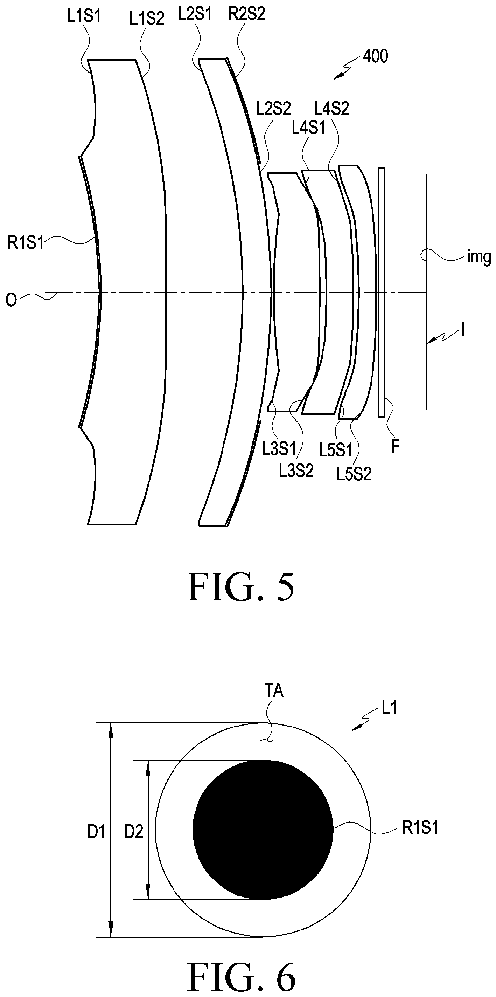

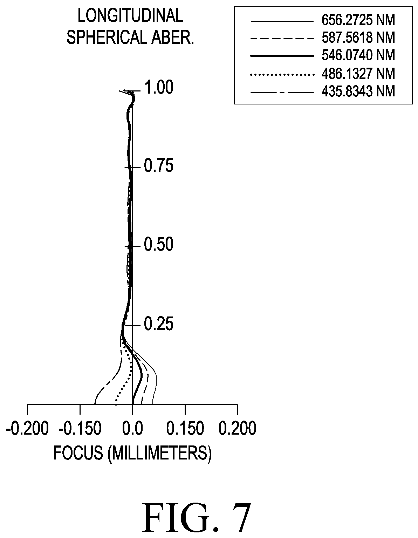

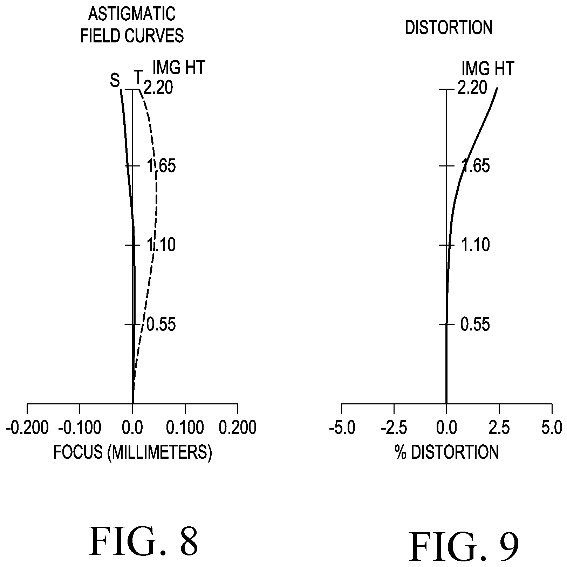

FIG. 5 is a view illustrating a lens assembly according to an embodiment of the disclosure. FIG. 6 is a view illustrating an example of an annular aperture in a lens assembly according to an embodiment of the disclosure. FIG. 7 is a graph illustrating the spherical aberration of the lens assembly of FIG. 5 according to an embodiment of the disclosure. FIG. 8 is a graph illustrating the astigmatism of the lens assembly of FIG. 5 according to an embodiment of the disclosure. FIG. 9 is a graph illustrating the distortion ratio of the lens assembly of FIG. 5 according to an embodiment of the disclosure.

FIG. 7 is a graph showing the spherical aberration of the lens assembly 400 according to an embodiment of the disclosure. The horizontal axis denotes the coefficient of the longitudinal spherical aberration, and the vertical axis denotes the normalized distance from the optical axis (e.g., the optical axis O), showing variations in the longitudinal spherical aberration according to the wavelengths of light. The longitudinal spherical aberration is shown for light having, e.g., a wavelength of 656.2725 (NM, nanometer) (e.g., red), 587.5618 (NM) (e.g., yellow), 546.0740 (NM), 486.1327 (NM) (e.g., blue), and 435.8343 (NM). FIG. 8 is a graph illustrating the astigmatism of a lens assembly 400 according to an embodiment of the disclosure, for light having a wavelength of 546.0740 NM, where 'S' exemplifies a sagittal plane and 'T' exemplifies a tangential plane. FIG. 9 is a graph illustrating the distortion ratio of a lens assembly 400 according to an embodiment of the disclosure, for light having a wavelength of 546.0740 NM.

Referring to FIGS. 5 to 9, the lens assembly 400 (e.g., the camera module 180, 280, 305, 312, or 313 of FIGS. 1 to 4 or the lens assembly 210 of FIG. 2) may implement, e.g., the camera module 180, 280, 305, 312, or 313 of FIGS. 1 to 4. In an embodiment, the lens assembly 400 may include a plurality of (e.g., five) lenses L1, L2, L3, L4, and L5 aligned with the optical axis O, and at least two reflective surfaces R1S1 and R2S2. The plurality of lenses L1, L2, L3, L4, and L5 may be sequentially disposed toward the image sensor I along the optical-axis O direction, for example. The plurality of lenses L1, L2, L3, L4, and L5 may be generally formed of a plastic material, and some of the plurality of lenses L1, L2, L3, L4, and L5 may be formed of a glass material according to specifications of the lens assembly 400 or the electronic device (e.g., the electronic device 101, 102, 104, and 300 of FIG. 1 or 4). By including at least two reflective surfaces R1S1 and R2S2, the lens assembly 400 may implement a telephoto lens having an angle of view of about 15 degrees or more and about 25 degrees or less even if the total lens length is reduced. For example, while being mounted on a downsized electronic device such as a smartphone, the lens assembly may enhance the telephoto performance of the electronic device. In an embodiment(s) of the disclosure, the term "total lens length" may refer to a distance from the object-side surface L1S1 (or the second reflective surface R1S1) of the first lens L1 to the image sensor I (e.g., the imaging plane img).

According to an embodiment, the at least two reflective surfaces R1S1 and R2S2 may be disposed between the object-side surface L1S1 of the first lens L1 disposed farthest from the image sensor and the sensor-side surface L5S2 of the lens (e.g., the fifth lens L5) disposed closest to the image sensor I. Here, that the 'reflective surface(s) are disposed between the object-side surface LnS1 of the nth lens Ln and the sensor-side surface LmS2 of the mth lens Lm' may be understood as including a configuration in which the reflective surface(s) are disposed on the object-side surface LnS1 of the nth lens Ln or the sensor-side surface LmS2 of the mth lens Lm. In the illustrated embodiment, reflective surfaces R1S1 and R2S2 may be disposed in the object-side surface L1S1 of the first lens L1 and the sensor-side surface L2S2 of the second lens L2, respectively. For example, the object-side surface L1S1 of the first lens L1 and the sensor-side surface L2S2 of the second lens L2 may at least partially function as reflective surfaces R1S1 and R2S2. In an embodiment, light transmitted through the first lens L1 from the outside may be reflected by the first reflective surface R2S2 of the sensor-side surface L2S2 of the second lens L2 to be guided toward the first lens L1. In an embodiment, light reflected by the first reflective surface R2S2 may be reflected by the second reflective surface R1S1 of the object-side surface L1 of the first lens L1 to be guided toward the second lens L2 and/or the image sensor I. "Reflected by the second reflective surface R1S1 toward the second lens L2" may refer to light reflected by the second reflective surface R1S1 being guided to an area surrounded by the first reflective surface R2S2.

According to an embodiment, as illustrated in FIG. 6, the first lens L1 (e.g., the object-side surface L1S1) may include a reflective area (e.g., the second reflective surface R1S1) in the center and a transmissive area TA surrounding the second reflective surface R1S1. Due to the second reflective surface R1S1, the central area of the first lens L1 may block light incident from the outside, and the first lens L1 may function as an annular aperture that allows light to be substantially incident on the first reflective surface R2S2 through the surrounding area (e.g., the transmissive area TA). In FIG. 6, 'D1' may illustrate the outer diameter of the annular aperture or the outer diameter of the transmissive area TA, and 'D2' may illustrate the inner diameter of the annular aperture or the inner diameter of the transmissive area TA. The inner diameter of the annular aperture or the inner diameter 'D2' of the transmissive area TA may be understood as the diameter of the second reflective surface R1S1 (or the reflective area).

According to an embodiment, the transmissive area TA and the reflective area (e.g., the second reflective surface R1S1) may have different radii of curvature on the object-side surface L1S1 of the first lens L1. When the transmissive area TA and the second reflective surface R1S1 have different radii of curvature on the object-side surface L1S1 of the first lens L1, spherical aberration of the lens assembly 400 may be easily controlled. When the transmissive area TA and the second reflective surface R1S1 have similar or substantially the same radius of curvature on the object-side surface L1S1 of the first lens L1, more lenses may be disposed to control spherical aberration. For example, when the transmissive area TA and the second reflective surface R1S1 have different radii of curvature on the object-side surface L1S1 of the first lens L1, the lens assembly 400 may be downsized and provide good optical performance.

According to an embodiment, although not illustrated, a transmissive area may be provided in a central portion of the sensor-side surface L2S2 of the second lens L2, and a reflective area (e.g., the first reflective surface R2S2) may be provided around the transmissive area. For example, the sensor-side surface L2S2 of the second lens L2 may be implemented in a shape in which the reflective area (the second reflective surface R1S1) and the transmissive area TA of FIG. 6 are inverted. In an embodiment, the first reflective surface R2S2 provided to the second lens L2 may reflect light incident through the transmissive area TA of the first lens L1 to be guided to the second reflective surface R1S1. In an embodiment, the transmissive area and the reflective area on the sensor-side surface L2S2 of the second lens L2 may have different radii of curvature. When the transmissive area and the reflective area have different radii of curvature on the sensor-side surface L2S2 of the second lens L2, spherical aberration of the lens assembly 400 may be easily controlled. When the transmissive area and the reflective area have similar or substantially the same radius of curvature on the sensor-side surface L2S2 of the second lens L2, a larger number of lenses may be disposed to control spherical aberration. For example, when the transmissive area and the reflective area have different radii of curvature on the sensor-side surface L2S2 of the second lens L2, the lens assembly 400 may be downsized and provide good optical performance.

In the present embodiment, a configuration in which the reflective surfaces R2S2 and R1S1 are disposed on the object-side surface L1S1 of the first lens L1 and the sensor-side surface L2S2 of the second lens L2 is illustrated, but the reflective surfaces R2S2 and R1S1 may be disposed at an arbitrary position between the object-side surface L1 of the first lens L1 and the sensor-side surface of the lens (e.g., the fifth lens L5) closest to the image sensor. In the arrangement of the reflective surfaces R2S2 and R1S1, aberration correction, lens brightness (e.g., F-number), and/or size of the lens assembly 400 may be considered. For example, when the reflective surfaces R2S2 and R1S1 are placed too close to each other, aberration correction may become difficult and it may be difficult to implement a bright lens. When the reflective surfaces R2S2 and R1S1 are disposed too far from each other, it may be difficult to downsize the lens assembly 400.

According to an embodiment, the lens assembly 400 may further include an infrared cut filter F. The infrared cut filter F may be, e.g., disposed between the fifth lens L5 and the image sensor I. The infrared cut filter F is not identified by the user's naked eye, but may block light (e.g., infrared light) in a wavelength band sensed by a photosensitive film or the image sensor I. In an embodiment, depending on the use of the lens assembly 400 or the electronic device (e.g., the electronic device 101, 102, 104, or 300 of FIG. 1, 3 or 4), the infrared cut filter F may be replaced with a band pass filter that transmits infrared rays and blocks visible light. For example, when the lens assembly 400 or the image sensor I provides a function to detect infrared rays, the infrared cut filter F may be replaced with a band pass filter that transmits infrared rays.

According to an embodiment, the infrared cut filter F and/or the image sensor I may be described as a separate component from the lens assembly 400. For example, the infrared cut filter F and/or the image sensor I may be mounted on an electronic device (e.g., the electronic device 101, 102, 104, or 300 of FIG. 1 or 4) or an optical device (e.g., the camera module 180 or 280 of FIG. 1 or 2), and the lens assembly 400 may be mounted on the electronic device or the optical device in a state aligned with the infrared cut filter F and/or the image sensor I in the optical axis O. In an embodiment, the image sensor I includes an imaging plane img aligned with the optical axis O, and may receive focused or guided light through the lenses L1, L2, L3, L4, and L5.

According to an embodiment, at least one of the lenses L1, L2, L3, L4, and L5 may reciprocate along the optical-axis O direction, and the electronic device (e.g., the electronic device 101, 102, 104, or 300 of FIG. 1 or 4) or the processor 120 of FIG. 1 may reciprocate at least one of the lenses L1, L2, L3, L4, and L5 in the optical-axis O direction, thereby performing focal length adjustment or focal length adjustment. In an embodiment, at least one of the lenses L1, L2, L3, L4, and L5 may reciprocate horizontally on a plane substantially perpendicular to the optical axis O. For example, the electronic device 101, 102, 104, or 300 or the processor 120 may perform an image stabilization operation by horizontally reciprocating at least one of the lenses L1, L2, L3, L4, and L5 on a plane substantially perpendicular to the optical axis O. In an embodiment, the lens assembly 400 may be disposed as any one of the camera modules 305, 312, and 313 of FIG. 3 or 4.

According to an embodiment, the lenses L1, L2, L3, L4, and L5 may include, e.g., an object-side surface and an image sensor-side surface. As mentioned above, the reference numbers for the lenses L1, L2, L3, L4, and L5 are omitted from the drawings, but the first to fifth lenses L1, L2, L3, L4, and L5 may be distinguished through the reference number 'LnS1' or 'LnS2' for the lens surface.

According to an embodiment, the lens assembly 400 may meet the conditions of Equation 1 regarding the Abbe number of the first lens L1 and the Abbe number of the lens (e.g., the fourth lens L4) disposed second from the image sensor I.

[Equation 1]

$$28 \leq V1 - V4 \leq 42$$

Here, 'V1' is the Abbe number of the first lens L1, and 'V4' is the Abbe number of the fourth lens L4. If the lens assembly does not meet the conditions of Equation 1, chromatic aberration may increase, resulting in deterioration of image quality or an increase in the total lens length. For example, as the lens assembly 400 meets the conditions of Equation 1, aberration correction may be easily performed.

According to an embodiment, the lens assembly 400 may have an effective focal length of about 11.75 mm, an F-number of about 1.88, an angle of view of about 19.33 degrees, and/or a total lens length of about 6.280 mm. As mentioned above, the 'total lens length' is, e.g., a distance from the object-side surface L1S1 of the first lens L1 to the imaging plane img of the image sensor I, and may be a distance measured from the optical axis O. When the lens assembly 400 includes an annular aperture, the F-number 'Fno_eff' may be calculated by the following Equation 2.

[Equation 2]

$$Fno_{eff} = \frac{EFL}{D1\sqrt{1 - (\frac{D2}{D1})^2}}$$

In Equation 2, 'EFL' may be the effective focal length of the lens assembly 400 and, as described above, 'D1' may be the outer diameter of the annular aperture, and 'D2' may be the inner diameter of the annular aperture (e.g., the outer diameter of the second reflective surface R1S1). In the illustrated embodiment, the outer diameter D1 of the annular aperture may be about 8.7 mm, and the inner diameter of the annular aperture may be about 6.1 mm.

In an embodiment, the lens assembly 400 may be manufactured in specifications illustrated in Table 1 below.

[Table 1]

| lens surface (Surf) | | Radius of curvature (Radius) | Thickness (Thick) | Effective focal length (EFL) | Refractive index (nd) | Abbe number (vd) |
|---|---|---|---|---|---|---|
| | obj | infinity | infinity | | | |
| | sto | infinity | 0.000 | | | |
| L1S1 | S2 | 14.706 | 1.480 | 26.098 | 1.54410 | 56.09 |
| L1S2 | S3 | -3168.489 | 1.464 | | | |
| L2S1 | S4 | -26.761 | 0.545 | 88.484 | 1.53480 | 55.71 |
| R2S2 | S5 | -14.171 | 0.000 | | | |
| R2S2 | S6 | -14.171 | -0.545 | 88.484 | 1.53480 | 55.71 |
| L2S1 | S7 | -26.761 | -1.464 | | | |
| L1S2 | S8 | -3168.489 | -1.150 | 18.520 | 1.54410 | 56.09 |
| R1S1 | S9 | -10.045 | 0.000 | | | |
| R1S1 | S10 | -10.045 | 1.150 | 18.520 | 1.54410 | 56.09 |
| L1S2 | S11 | -3168.489 | 1.464 | | | |
| L2S1 | S12 | -26.761 | 0.534 | 27.852 | 1.53480 | 55.71 |

(continued)

| lens surface (Surf) | | Radius of curvature (Radius) | Thickness (Thick) | Effective focal length (EFL) | Refractive index (nd) | Abbe number (vd) |
|---|---|---|---|---|---|---|
| L2S2 | S13 | -9.636 | 0.030 | | | |
| L3S1 | S14 | 53.437 | 0.832 | 13.399 | 1.54410 | 56.09 |
| L3S2 | S15 | -8.396 | 0.117 | | | |
| L4S1 | S16 | -22.453 | 0.500 | -26.070 | 1.67074 | 19.23 |
| L4S2 | S17 | 79.767 | 0.090 | | | |
| L5S1 | S18 | -6.326 | 0.303 | -16.175 | 1.53480 | 55.71 |
| L5S2 | S19 | -23.938 | 0.030 | | | |
| | S20 | infinity | 0.110 | | 1.51680 | 64.20 |
| | S21 | infinity | 0.796 | | | |
| | img | infinity | -0.006 | | | |

In Table 1, the reference number 'LnS1' for the lens surface is the object-side surface of the nth lens, 'LnS2' is the sensor-side surface of the nth lens, and 'RnS1' and 'RnS2' exemplify that the reflective areas (e.g., the reflective surfaces R1S1 and R2S2 of FIG. 5) are arranged in the object-side surface or the sensor-side surface of the nth lens. The reference number 'Sn' regarding the lens surface is a serial number assigned to the lens surface or the reflective surface according to the order in which light incident from the outside arrives, and it may be identified that the light reflected by the first reflective surface R2S2 implemented in the second lens L2 is reflected by the second reflective surface R1S1 implemented in the first lens L1 and guided to the image sensor I (e.g., the imaging plane img). In Table 1, 'S20' and 'S21' may illustrate the object-side surface and the sensor-side surface of the infrared cut filter F. The aperture of the lens assembly 400 may be exemplified as 'sto', and the object-side surface of the first lens in the lens assembly 400 of FIG. 5 may function as an aperture. However, an embodiment(s) of the disclosure are not limited thereto, and the aperture may be disposed farther from the image sensor I than the object-side surface L1S1 of the first lens L1.

Table 2, Table 3, Table 4, Table 5, and Table 6 below describe aspherical coefficients of the lenses L1, L2, L3, L4, and L5, and the definition of aspherical surface may be calculated by Equation 3 below.

[Equation 3]

$$z=\frac{c'y^2}{1+\sqrt{1-(k+1)c'^2 y^2}}+A y^4+B y^6+C y^8+D y^{10}+E y^{12}+F y^{14}+G y^{16}+H y^{18}+J y^{20}+K y^{22}+L y^{24}+M y^{26}+N y^{28}+O y^{30}$$

In Equation 3, 'z' may mean the distance from the peak of the lens in the optical axis (e.g., optical axis O) direction, 'y' may mean the distance in the direction perpendicular to the optical axis O, 'c' may mean the reciprocal of the radius of curvature at the peak of the lens, 'k' may mean the conic constant, 'A', 'B', 'C', 'D', 'E', 'G', 'H', 'J', 'K', 'L', 'N', and 'O' may mean aspherical coefficients.

[Table 2]

| lens surface (Surf) | S2 | S3 | S4 | S5 |
|---|---|---|---|---|
| Radius of curvature | 14.706 | -3168.489 | -26.761 | -14.171 |
| k(Conic) | -6.6575E+00 | -9.0000E+01 | 3.5234E+01 | 5.6529E+00 |
| A(4th) | 3.2177E-05 | -1.5152E-03 | -4.0572E-02 | -1.1517E-02 |
| B(6th) | -6.3256E-04 | 3.6837E-04 | 3.0803E-02 | 8.1074E-03 |
| C(8th) | 2.4144E-04 | -2.4044E-04 | -1.3622E-02 | -3.2961E-03 |
| D(10th) | -6.4609E-05 | 7.1890E-05 | 3.9278E-03 | 8.8077E-04 |
| E(12th) | 1.2142E-05 | -1.1972E-05 | -7.8611E-04 | -1.6460E-04 |
| F(14th) | -1.5754E-06 | 1.1974E-06 | 1.1360E-04 | 2.2352E-05 |

(continued)

| lens surface (Surf) | S2 | S3 | S4 | S5 |
|---|---|---|---|---|
| G(16th) | 1.3728E-07 | -7.3668E-08 | -1.2134E-05 | -2.2533E-06 |
| H(18th) | -7.7991E-09 | 2.7307E-09 | 9.6844E-07 | 1.7006E-07 |
| J(20th) | 2.7526E-10 | -5.5905E-11 | -5.7667E-08 | -9.5762E-09 |
| K(22th) | -5.4533E-12 | 4.8488E-13 | 2.5257E-09 | 3.9600E-10 |
| L(24th) | 4.6137E-14 | 0.0000E+00 | -7.8900E-11 | -1.1651E-11 |
| M(26th) | 0.0000E+00 | 0.0000E+00 | 1.6607E-12 | 2.3028E-13 |
| N(28th) | 0.0000E+00 | 0.0000E+00 | -2.1060E-14 | -2.7340E-15 |
| O(30th) | 0.0000E+00 | 0.0000E+00 | 1.2131E-16 | 1.4701E-17 |

[Table 3]

| lens surface (Surf) | S6 | S7 | S8 | S9 |
|---|---|---|---|---|
| Radius of curvature | -14.171 | -26.761 | -3168.489 | -10.045 |
| k(Conic) | 5.6529E+00 | 3.5234E+01 | -9.0000E+01 | 2.2236E+00 |
| A(4th) | -1.1517E-02 | -4.0572E-02 | -1.5152E-03 | 1.8353E-04 |
| B(6th) | 8.1074E-03 | 3.0803E-02 | 3.6837E-04 | -2.1713E-04 |
| C(8th) | -3.2961E-03 | -1.3622E-02 | -2.4044E-04 | 6.6967E-05 |
| D(10th) | 8.8077E-04 | 3.9278E-03 | 7.1890E-05 | -9.8607E-06 |
| E(12th) | -1.6460E-04 | -7.8611E-04 | -1.1972E-05 | 8.2314E-07 |
| F(14th) | 2.2352E-05 | 1. 1360E-04 | 1.1974E-06 | -3.5160E-08 |
| G(16th) | -2.2533E-06 | -1.2134E-05 | -7.3668E-08 | -3.4995E-09 |
| H(18th) | 1.7006E-07 | 9.6844E-07 | 2.7307E-09 | 0.0000E+00 |
| J(20th) | -9.5762E-09 | -5.7667E-08 | -5.5905E-11 | 0.0000E+00 |
| K(22th) | 3.9600E-10 | 2.5257E-09 | 4.8488E-13 | 0.0000E+00 |
| L(24th) | -1.1651E-11 | -7.8900E-11 | 0.0000E+00 | 0.0000E+00 |
| M(26th) | 2.3028E-13 | 1.6607E-12 | 0.0000E+00 | 0.0000E+00 |
| N(28th) | -2.7340E-15 | -2.1060E-14 | 0.0000E+00 | 0.0000E+00 |
| O(30th) | 1.4701E-17 | 1.2131E-16 | 0.0000E+00 | 0.0000E+00 |

[Table 4]

| lens surface (Surf) | S10 | S11 | S12 | S13 |
|---|---|---|---|---|
| Radius of curvature | -10.045 | -3168.489 | -26.761 | -9.636 |
| k(Conic) | 2.2236E+00 | -9.0000E+01 | 3.5234E+01 | 8.2003E+00 |
| A(4th) | 1.8353E-04 | -1.5152E-03 | -4.0572E-02 | -6.3813E-03 |
| B(6th) | -2.1713E-04 | 3.6837E-04 | 3.0803E-02 | 8.6940E-03 |
| C(8th) | 6.6967E-05 | -2.4044E-04 | -1.3622E-02 | -3.7366E-03 |
| D(10th) | -9.8607E-06 | 7.1890E-05 | 3.9278E-03 | 8.4415E-04 |
| E(12th) | 8.2314E-07 | -1.1972E-05 | -7.8611E-04 | -7.2742E-05 |
| F(14th) | -3.5160E-08 | 1.1974E-06 | 1.1360E-04 | 0.0000E+00 |
| G(16th) | -3.4995E-09 | -7.3668E-08 | -1.2134E-05 | 0.0000E+00 |
| H(18th) | 0.0000E+00 | 2.7307E-09 | 9.6844E-07 | 0.0000E+00 |

(continued)

| lens surface (Surf) | S10 | S11 | S12 | S13 |
|---|---|---|---|---|
| J(20th) | 0.0000E+00 | -5.5905E-11 | -5.7667E-08 | 0.0000E+00 |
| K(22th) | 0.0000E+00 | 4.8488E-13 | 2.5257E-09 | 0.0000E+00 |
| L(24th) | 0.0000E+00 | 0.0000E+00 | -7.8900E-11 | 0.0000E+00 |
| M(26th) | 0.0000E+00 | 0.0000E+00 | 1.6607E-12 | 0.0000E+00 |
| N(28th) | 0.0000E+00 | 0.0000E+00 | -2.1060E-14 | 0.0000E+00 |
| O(30th) | 0.0000E+00 | 0.0000E+00 | 1.2131E-16 | 0.0000E+00 |

[Table 5]

| lens surface (Surf) | S14 | S15 | S16 |
|---|---|---|---|
| Radius of curvature | 53.437 | -8.396 | -22.453 |
| k(Conic) | -7.2870E+01 | 6.9250E+00 | -1.2988E+01 |
| A(4th) | 6.5949E-02 | 1.0439E-01 | -1.8164E-02 |
| B(6th) | -4.3227E-02 | -6.9118E-02 | -1.0016E-02 |
| C(8th) | 1.3458E-02 | 2.0248E-02 | 6.2025E-03 |
| D(10th) | -2.9539E-03 | -4.2168E-03 | -1.6361E-03 |
| E(12th) | 3.6429E-04 | 6.4171E-04 | 2.2017E-04 |
| F(14th) | -1.7465E-05 | -5.5320E-05 | -1.0982E-05 |
| G(16th) | 0.0000E+00 | 1.9011E-06 | 0.0000E+00 |
| H(18th) | 0.0000E+00 | 0.0000E+00 | 0.0000E+00 |
| J(20th) | 0.0000E+00 | 0.0000E+00 | 0.0000E+00 |
| K(22th) | 0.0000E+00 | 0.0000E+00 | 0.0000E+00 |
| L(24th) | 0.0000E+00 | 0.0000E+00 | 0.0000E+00 |
| M(26th) | 0.0000E+00 | 0.0000E+00 | 0.0000E+00 |
| N(28th) | 0.0000E+00 | 0.0000E+00 | 0.0000E+00 |
| O(30th) | 0.0000E+00 | 0.0000E+00 | 0.0000E+00 |

[Table 6]

| lens surface (Surf) | S17 | S18 | S19 |
|---|---|---|---|
| Radius of curvature | 79.767 | -6.326 | -23.938 |
| k(Conic) | 8.7047E+01 | 6.4722E+00 | 6.0496E+01 |
| A(4th) | -3.2166E-02 | 1.0243E-01 | 3.2408E-02 |
| B(6th) | 5.7652E-03 | -7.4522E-02 | -2.4760E-02 |
| C(8th) | -2.1966E-03 | 2.8782E-02 | 6.3053E-04 |
| D(10th) | 1.7563E-03 | -8.4601E-03 | 3.4248E-03 |
| E(12th) | -1.0648E-03 | 1.7551E-03 | -1.1676E-03 |
| F(14th) | 3.3659E-04 | -1.9635E-04 | 1.6156E-04 |
| G(16th) | -5.4049E-05 | 8.6092E-06 | -8.5529E-06 |
| H(18th) | 4.2379E-06 | 0.0000E+00 | 0.0000E+00 |
| J(20th) | -1.2911E-07 | 0.0000E+00 | 0.0000E+00 |
| K(22th) | 0.0000E+00 | 0.0000E+00 | 0.0000E+00 |

(continued)

| lens surface (Surf) | S17 | S18 | S19 |
|---|---|---|---|
| L(24th) | 0.0000E+00 | 0.0000E+00 | 0.0000E+00 |
| M(26th) | 0.0000E+00 | 0.0000E+00 | 0.0000E+00 |
| N(28th) | 0.0000E+00 | 0.0000E+00 | 0.0000E+00 |
| O(30th) | 0.0000E+00 | 0.0000E+00 | 0.0000E+00 |

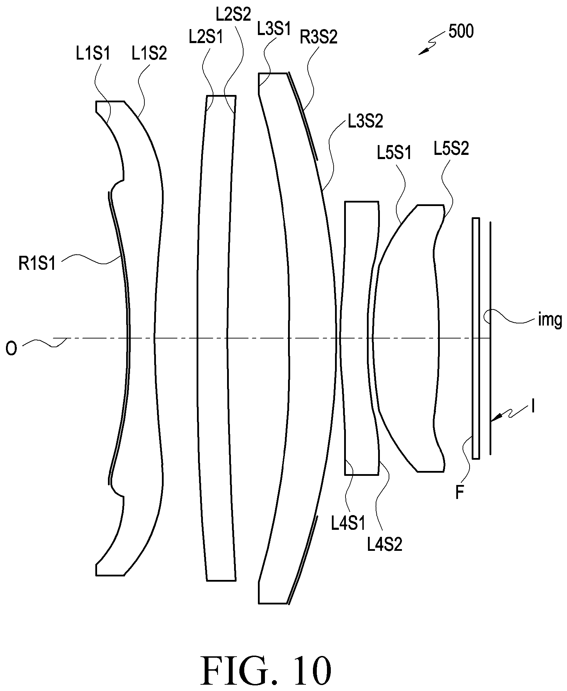

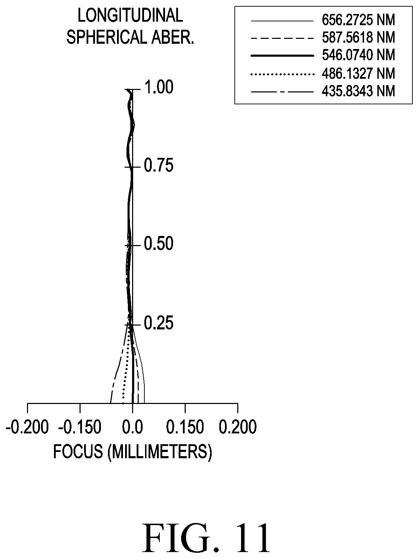

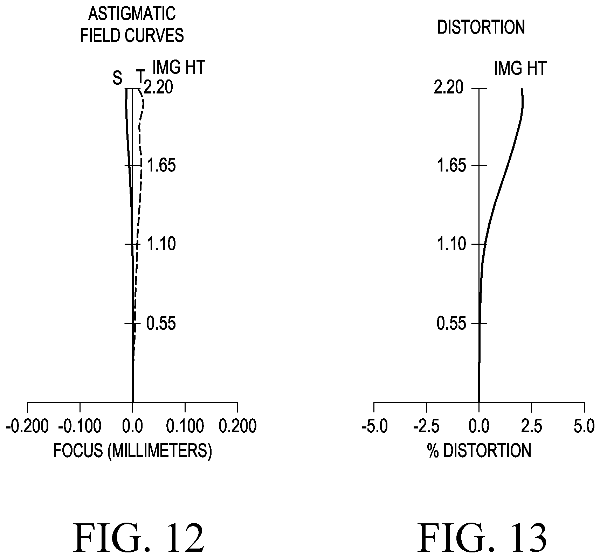

FIG. 10 is a view illustrating a lens assembly according to an embodiment of the disclosure. FIG. 11 is a graph illustrating the spherical aberration of the lens assembly of FIG. 10 according to an embodiment of the disclosure. FIG. 12 is a graph illustrating the astigmatism of the lens assembly of FIG. 10 according to an embodiment of the disclosure. FIG. 13 is a graph illustrating the distortion ratio of the lens assembly of FIG. 10 according to an embodiment of the disclosure.

Since the lens assembly 500 illustrated in FIGS. 10 to 13 may be similar to the lens assembly 400 of the above-described embodiment, a detailed description thereof may be partially omitted. Referring to FIGS. 10 to 13, the first reflective surface R3S2 may be disposed on the sensor-side surface L3S2 of the third lens L3, and the second reflective surface R1S1 may be disposed on the object-side surface L1S1 of the first lens L1. For example, the object-side surface L1S1 of the first lens L1 may be implemented as an annular aperture. In an embodiment, on the object-side surface L1S1 of the first lens L1 and/or the sensor-side surface L3S2 of the third lens L3, areas implemented as reflective areas (e.g., the areas indicated by 'R1S1' and 'R3S2') and an area implemented as a transmissive area may have different curvatures. On the object-side surface L1S1 of the first lens L1 and/or the sensor-side surface L3S2 of the third lens L3, the area implemented as the reflective area and the area implemented as the transmissive area have different curvatures, making it easy to control spherical aberration. In an embodiment, when the lens assembly 500 includes two reflective surfaces, a difference between the Abbe number of the first lens L1 and the Abbe number of the lens (e.g., the fourth lens L4) disposed second from the image sensor may be about 28 or more and about 42 or less. When the condition regarding the Abbe number of the lens(s) is met, chromatic aberration correction of the lens assembly 500 may be easy.

According to an embodiment, the lens assembly 500 may have an effective focal length of about 12.17 mm, an F-number of about 1.88, an angle of view of about 18.75 degrees, and/or a total lens length of about 6.4 mm. In an embodiment, the outer diameter of the annular aperture (e.g., the transmissive area TA of FIG. 6) may be about 8.22 mm, and the inner diameter of the annular aperture may be about 5.4 mm. In an embodiment, the lens assembly 500 may be manufactured with the specifications exemplified in Table 7 below, and may have the aspheric coefficients of Table 8, Table 9, Table 10, Table 11, Table 12, and Table 13. In Table 7, the reference number 'Sn' assigned to the lens surface is a serial number assigned according to the order in which externally incident light arrives, like in the above embodiment, and 'S24' and 'S25' may be reference numbers assigned to the surfaces of the infrared cut filter F.

[Table 7]

| lens surface (Surf) | | Radius of curvature (Radius) | Thickness (Thick) | Effective focal length (EFL) | Refractive index (nd) | Abbe number (vd) |
|---|---|---|---|---|---|---|
| | obj | infinity | infinity | | | |
| | sto | infinity | 0.300 | | | |
| L1S1 | S2 | 16.423 | 0.714 | 58.45 | 1.54410 | 56.09 |
| L1S2 | S3 | 33.285 | 0.610 | | | |
| L2S1 | S4 | 15.225 | 0.591 | 186.00 | 1.53480 | 55.71 |
| L2S2 | S5 | 17.742 | 1.273 | | | |
| L3S1 | S6 | -25.925 | 0.662 | 62.78 | 1.53480 | 55.71 |
| R2S2 | S7 | -14.742 | 0.000 | | | |
| R2S2 | S8 | -14.742 | -0.662 | 62.78 | 1.53480 | 55.71 |
| L3S1 | S9 | -25.925 | -1.273 | | | |
| L2S2 | S10 | 17.742 | -0.591 | 186.00 | 1.54410 | 56.09 |
| L2S1 | S11 | 15.225 | -0.610 | | | |
| L1S2 | S12 | 33.285 | -0.480 | 17.30 | 1.54410 | 56.09 |

(continued)

| lens surface (Surf) | | Radius of curvature (Radius) | Thickness (Thick) | Effective focal length (EFL) | Refractive index (nd) | Abbe number (vd) |
|---|---|---|---|---|---|---|
| R1S1 | S13 | -13.268 | 0.000 | | | |
| R1S1 | S14 | -13.268 | 0.480 | 17.30 | 1.53480 | 55.71 |
| L1S2 | S15 | 33.285 | 0.610 | | | |
| L2S1 | S16 | 15.225 | 0.591 | 186.00 | 1.53480 | 55.71 |
| L2S2 | S17 | 17.742 | 1.273 | | | |
| L3S1 | S18 | -29.719 | 0.530 | 14.04 | 1.53480 | 55.71 |
| L3S2 | S19 | -6.017 | 0.199 | | | |
| L4S1 | S20 | -10.083 | 0.480 | -35.65 | 1.67074 | 19.23 |
| L4S2 | S21 | -17.614 | 0.100 | | | |
| L5S1 | S22 | -19.427 | 0.703 | -82.63 | 1.53480 | 55.71 |
| L5S2 | S23 | -35.180 | 0.100 | | | |
| | S24 | infinity | 0.110 | | 1.51680 | 64.20 |
| | S25 | infinity | 0.696 | | | |
| | img | infinity | -0.006 | | | |

[Table 8]

| lens surface (Surf) | S2 | S3 | S4 | S5 |
|---|---|---|---|---|
| Radius of curvature | 16.423 | 33.285 | 15.225 | 17.742 |
| k(Conic) | -4.7327E+01 | -8.7055E+01 | -1.6038E-01 | -4.2956E+00 |
| A(4th) | -4.4043E-03 | -1.0458E-02 | -4.2545E-03 | 2.2626E-03 |
| B(6th) | 1.8461E-03 | 4.5450E-03 | 1.7014E-03 | -3.8397E-04 |
| C(8th) | -5.2734E-04 | -1.3743E-03 | -3.8039E-04 | 7.2968E-06 |
| D(10th) | 9.3752E-05 | 3.1662E-04 | 5.2136E-05 | 4.2348E-06 |
| E(12th) | -1.1109E-05 | -5.8536E-05 | -4.5498E-06 | -6.8100E-07 |
| F(14th) | 8.6961E-07 | 8.6151E-06 | 2.5713E-07 | 5.7223E-08 |
| G(16th) | -4.4377E-08 | -9.8191E-07 | -9.1344E-09 | -2.7690E-09 |
| H(18th) | 1.4334E-09 | 8.4072E-08 | 1.8445E-10 | 7.0499E-11 |
| J(20th) | -2.7650E-11 | -5.2673E-09 | -1.6034E-12 | -7.2375E-13 |
| K(22th) | 2.8815E-13 | 2.3527E-10 | 0.0000E+00 | 0.0000E+00 |
| L(24th) | -1.3474E-15 | -7.2355E-12 | 0.0000E+00 | 0.0000E+00 |
| M(26th) | 0.0000E+00 | 1.4466E-13 | 0.0000E+00 | 0.0000E+00 |
| N(28th) | 0.0000E+00 | -1.6818E-15 | 0.0000E+00 | 0.0000E+00 |
| O(30th) | 0.0000E+00 | 8.5660E-18 | 0.0000E+00 | 0.0000E+00 |

[Table 9]

| lens surface (Surf) | S6 | S7 | S8 | S9 |
|---|---|---|---|---|
| Radius of curvature | -25.925 | -14.742 | -14.742 | -25.925 |
| k(Conic) | 3.1733E+01 | 5.8425E+00 | 5.8425E+00 | 3.1733E+01 |
| A(4th) | -1.2925E-02 | -3.9986E-03 | -3.9986E-03 | -1.2925E-02 |

(continued)

| lens surface (Surf) | S6 | S7 | S8 | S9 |
|---|---|---|---|---|
| B(6th) | 7.7603E-03 | 2.0187E-03 | 2.0187E-03 | 7.7603E-03 |
| C(8th) | -2.4192E-03 | -5.5809E-04 | -5.5809E-04 | -2.4192E-03 |
| D(10th) | 4.5886E-04 | 9.5776E-05 | 9.5776E-05 | 4.5886E-04 |
| E(12th) | -5.6332E-05 | -1.0757E-05 | -1.0757E-05 | -5.6332E-05 |
| F(14th) | 4.5940E-06 | 8.1572E-07 | 8.1572E-07 | 4.5940E-06 |
| G(16th) | -2.4923E-07 | -4.2363E-08 | -4.2363E-08 | -2.4923E-07 |
| H(18th) | 8.7407E-09 | 1.5052E-09 | 1.5052E-09 | 8.7407E-09 |
| J(20th) | -1.8146E-10 | -3.5904E-11 | -3.5904E-11 | -1.8146E-10 |
| K(22th) | 1.6323E-12 | 5.4869E-13 | 5.4869E-13 | 1.6323E-12 |
| L(24th) | 7.8974E-15 | -4.8459E-15 | -4.8459E-15 | 7.8974E-15 |
| M(26th) | -2.0602E-16 | 1.8774E-17 | 1.8774E-17 | -2.0602E-16 |
| N(28th) | 0.0000E+00 | 0.0000E+00 | 0.0000E+00 | 0.0000E+00 |
| O(30th) | 0.0000E+00 | 0.0000E+00 | 0.0000E+00 | 0.0000E+00 |

[Table 10]

| lens surface (Surf) | S10 | S11 | S12 | S13 |
|---|---|---|---|---|
| Radius of curvature | 17.742 | 15.225 | 33.285 | -13.268 |
| k(Conic) | -4.2956E+00 | -1.6038E-01 | -8.7055E+01 | 2.1422E+01 |
| A(4th) | 2.2626E-03 | -4.2545E-03 | -1.0458E-02 | -1.7574E-03 |
| B(6th) | -3.8397E-04 | 1.7014E-03 | 4.5450E-03 | 7.5221E-04 |
| C(8th) | 7.2968E-06 | -3.8039E-04 | -1.3743E-03 | -2.1935E-04 |
| D(10th) | 4.2348E-06 | 5.2136E-05 | 3.1662E-04 | 1.1059E-04 |
| E(12th) | -6.8100E-07 | -4.5498E-06 | -5.8536E-05 | -5.9791E-05 |
| F(14th) | 5.7223E-08 | 2.5713E-07 | 8.6151E-06 | 2.1844E-05 |
| G(16th) | -2.7690E-09 | -9.1344E-09 | -9.8191E-07 | -4.6966E-06 |
| H(18th) | 7.0499E-11 | 1.8445E-10 | 8.4072E-08 | 5.4216E-07 |
| J(20th) | -7.2375E-13 | -1.6034E-12 | -5.2673E-09 | -2.6041E-08 |
| K(22th) | 0.0000E+00 | 0.0000E+00 | 2.3527E-10 | 0.0000E+00 |
| L(24th) | 0.0000E+00 | 0.0000E+00 | -7.2355E-12 | 0.0000E+00 |
| M(26th) | 0.0000E+00 | 0.0000E+00 | 1.4466E-13 | 0.0000E+00 |
| N(28th) | 0.0000E+00 | 0.0000E+00 | -1.6818E-15 | 0.0000E+00 |
| O(30th) | 0.0000E+00 | 0.0000E+00 | 8.5660E-18 | 0.0000E+00 |

[Table 11]

| lens surface (Surf) | S14 | S15 | S16 | S17 |
|---|---|---|---|---|
| Radius of curvature | -13.268 | 33.285 | 15.225 | 17.742 |
| k(Conic) | 2.1422E+01 | -8.7055E+01 | -1.6038E-01 | -4.2956E+00 |
| A(4th) | -1.7574E-03 | -1.0458E-02 | -4.2545E-03 | 2.2626E-03 |
| B(6th) | 7.5221E-04 | 4.5450E-03 | 1.7014E-03 | -3.8397E-04 |
| C(8th) | -2.1935E-04 | -1.3743E-03 | -3.8039E-04 | 7.2968E-06 |

(continued)

| lens surface (Surf) | S14 | S15 | S16 | S17 |
|---|---|---|---|---|
| D(10th) | 1.1059E-04 | 3.1662E-04 | 5.2136E-05 | 4.2348E-06 |
| E(12th) | -5.9791E-05 | -5.8536E-05 | -4.5498E-06 | -6.8100E-07 |
| F(14th) | 2.1844E-05 | 8.6151E-06 | 2.5713E-07 | 5.7223E-08 |
| G(16th) | -4.6966E-06 | -9.8191E-07 | -9.1344E-09 | -2.7690E-09 |
| H(18th) | 5.4216E-07 | 8.4072E-08 | 1.8445E-10 | 7.0499E-11 |
| J(20th) | -2.6041E-08 | -5.2673E-09 | -1.6034E-12 | -7.2375E-13 |
| K(22th) | 0.0000E+00 | 2.3527E-10 | 0.0000E+00 | 0.0000E+00 |
| L(24th) | 0.0000E+00 | -7.2355E-12 | 0.0000E+00 | 0.0000E+00 |
| M(26th) | 0.0000E+00 | 1.4466E-13 | 0.0000E+00 | 0.0000E+00 |
| N(28th) | 0.0000E+00 | -1.6818E-15 | 0.0000E+00 | 0.0000E+00 |
| O(30th) | 0.0000E+00 | 8.5660E-18 | 0.0000E+00 | 0.0000E+00 |

[Table 12]

| lens surface (Surf) | S18 | S19 | S20 |
|---|---|---|---|
| Radius of curvature | -29.719 | -6.017 | -10.083 |
| k(Conic) | 5.1942E+01 | -3.9122E+00 | -7.0773E+01 |
| A(4th) | 9.2696E-04 | 1.4604E-02 | 1.3348E-02 |
| B(6th) | 1.5492E-02 | 3.4003E-02 | 1.0595E-02 |
| C(8th) | -9.0396E-03 | -2.1871E-02 | -7.8164E-03 |
| D(10th) | 2.1710E-03 | 5.6928E-03 | -2.8055E-03 |
| E(12th) | -2.9420E-04 | -8.2247E-04 | 3.5331E-03 |
| F(14th) | 2.4632E-05 | 7.4241E-05 | -1.3104E-03 |
| G(16th) | -1.2728E-06 | -4.4203E-06 | 2.4873E-04 |
| H(18th) | 3.5302E-08 | 1.7715E-07 | -2.4379E-05 |
| J(20th) | -5.7741E-11 | -4.7510E-09 | 9.7774E-07 |
| K(22th) | -3.2665E-11 | 8.2298E-11 | 0.0000E+00 |
| L(24th) | 1.1609E-12 | -8.4557E-13 | 0.0000E+00 |
| M(26th) | -1.7984E-14 | 4.1748E-15 | 0.0000E+00 |
| N(28th) | 1.0992E-16 | -4.0765E-18 | 0.0000E+00 |
| O(30th) | 0.0000E+00 | 0.0000E+00 | 0.0000E+00 |

[Table 13]

| lens surface (Surf) | S21 | S22 | S23 |
|---|---|---|---|
| Radius of curvature | -17.614 | -19.427 | -35.180 |
| k(Conic) | 3.3232E+01 | 7.0101E+01 | 6.1870E+01 |
| A(4th) | 2.6714E-02 | 4.7585E-03 | -2.8197E-02 |
| B(6th) | -1.9424E-02 | 3.0582E-03 | 1.7586E-02 |
| C(8th) | 3.2021E-02 | 2.1779E-02 | -5.4755E-03 |
| D(10th) | -2.9946E-02 | -2.1436E-02 | 1.5447E-03 |

(continued)

| lens surface (Surf) | S21 | S22 | S23 |
|---|---|---|---|
| E(12th) | 1.4502E-02 | 9.7593E-03 | -8.8461E-05 |
| F(14th) | -4.0273E-03 | -2.5453E-03 | -9.4118E-05 |
| G(16th) | 6.5153E-04 | 3.8842E-04 | 2.4394E-05 |
| H(18th) | -5.7162E-05 | -3.2232E-05 | -1.9742E-06 |
| J(20th) | 2.1037E-06 | 1.1240E-06 | 2.6813E-08 |
| K(22th) | 0.0000E+00 | 0.0000E+00 | 0.0000E+00 |
| L(24th) | 0.0000E+00 | 0.0000E+00 | 0.0000E+00 |
| M(26th) | 0.0000E+00 | 0.0000E+00 | 0.0000E+00 |
| N(28th) | 0.0000E+00 | 0.0000E+00 | 0.0000E+00 |
| O(30th) | 0.0000E+00 | 0.0000E+00 | 0.0000E+00 |

According to an embodiment, when securing telephoto performance using an optical member such as a prism or mirror, the lens assembly may be easy to downsize, but it may be difficult to implement a bright lens (e.g., a low F-number). In implementing a telephoto lens corresponding to an about 1/4.4"-size, 8-megapixel image sensor, it was identified that the lens assembly using optical members could have a volume of about 0.91 cc when it was a bright lens with an F-number of about 1.8. It was identified that the lens assembly according to an embodiment(s) of the disclosure could provide good telephoto performance corresponding to an about 1/4.4"-size, 8-megapixel image sensor and could be implemented as a bright lens with an F-number of about 1.8 while having a volume of about 0.36 cc. For example, the lens assembly according to an embodiment(s) of the disclosure may have a low F-number while providing large diameter telephoto performance suitable for high pixel/large image sensors, and may be easily downsized.

As described above, the lens assembly according to an embodiment(s) of the disclosure may be easily downsized while providing good telephoto performance. For example, the lens assembly according to an embodiment(s) of the disclosure may provide enhanced telephoto performance while being easy to be mounted on a compact electronic device even without using optical members such as prisms or mirrors. In an embodiment, the lens assembly may provide optical performance (e.g., telephoto performance) suitable for high pixel/large image sensors while being downsized.

Effects obtainable from the disclosure are not limited to the above-mentioned effects, and other effects not mentioned may be apparent to one of ordinary skill in the art from the following description.

As described above, according to an embodiment of the disclosure, a lens assembly (e.g., the lens assembly 400, 500 of FIG. 5 or 10) may comprise a plurality of lenses L1, L2, L3, L4, L5 sequentially aligned along an optical-axis (e.g., the optical axis O of FIG. 5 or 10) direction toward an image sensor (e.g., the image sensor I of FIG. 5 or 10), and at least two reflective surfaces (e.g., the surfaces indicated by 'R1S1', 'R2S2', and/or 'R3S2' of FIG. 5 or 10) disposed between an object-side surface (e.g., the surface indicated by 'L1S1' of FIG. 5 or 10) of a first lens L1 disposed farthest from the image sensor and a sensor-side surface (e.g., the surface indicated by 'L5S2' of FIG. 5 or 10) of a lens (e.g., the fifth lens L5 of FIG. 5 or 10) disposed closest to the image sensor, in the optical-axis direction. In an embodiment, the lens assembly may meet conditional equation 1 regarding an Abbe number V1 of the first lens and an Abbe number V4 of the fourth lens (e.g., the fourth lens L4 of FIG. 5 or 10) disposed second from the image sensor:

$$[\text{conditional equation 1}]$$

$$28 <= V1\text{-}V4 <= 42.$$

According to an embodiment, a first reflective surface among the at least two reflective surfaces may include a first reflective area (e.g., the area indicated by 'R2S2' and/or 'R3S2' of FIG. 5 or 10) formed in any one of a sensor-side surface (e.g., the surface indicated by 'L2S2' of FIG. 5) of a second lens (e.g., the second lens L2 of FIG. 5) disposed between the first lens and the fourth lens or a sensor-side surface (e.g., the surface indicated by 'L3S2' of FIG. 10) of a third lens (e.g., the third lens L3 of FIG. 10) disposed between the second lens and the fourth lens.

According to an embodiment, the first reflective area may be configured to reflect incident light to be guided to the first lens.

According to an embodiment, any one of the sensor-side surface of the second lens or the sensor-side surface of the third lens may include a first transmissive area surrounded by the first reflective area.

According to an embodiment, the first reflective area and the second transmissive area may have different radii of curvature.

According to an embodiment, a second reflective surface among the at least two reflective surfaces may include a second reflective area (e.g., the area indicated by 'R1S1' of FIG. 5, 6, or 10) formed in the object-side surface of the first lens.

According to an embodiment, the second reflective area may be configured to reflect incident light to be guided in a direction toward the image sensor.

According to an embodiment, the object-side surface of the first lens may include a second transmissive area (e.g., the transmissive area TA of FIG. 6) disposed to surround the second reflective area.

According to an embodiment, the second reflective area and the second transmissive area may have different radii of curvature.

According to an embodiment, any one of a sensor-side surface of a second lens disposed between the first lens and the fourth lens or a sensor-side surface of a third lens disposed between the second lens and the fourth lens may include a first reflective area functioning as a first reflective surface among the at least two reflective surfaces and a first transmissive area surrounded by the first reflective area. In an embodiment, the object-side surface of the first lens may include a second reflective area functioning as a second reflective surface among the at least two reflective surfaces and a second transmissive area disposed to surround the second reflective area. In an embodiment, the first reflective area may be configured to reflect light incident through the second transmissive area to be guided to the second reflective area, and the second reflective area is configured to reflect incident light to be guided to the first transmissive area.

According to an embodiment, the first reflective area and the first transmissive area may have different radii of curvature, and the second reflective area and the second transmissive area have different radii of curvature.

According to an embodiment, the lens assembly may have an angle of view of 15 degrees or more and 25 degrees and less.

According to an embodiment, at least one of the plurality of lenses may be configured to reciprocate along the optical-axis direction.

According to an embodiment of the disclosure, an electronic device (e.g., the electronic device 101, 102, 104, 300 of FIG. 1, 3, or 4) may comprise a lens assembly (e.g., the lens assembly 400, 500 of FIG. 5 or 10), an image sensor (e.g., the image sensor I of FIG. 5 or 10) configured to receive light focused or guided by the lens assembly, and a processor (e.g., the processor 120 of FIG. 1 or the image signal processor 260 of FIG. 2) configured to obtain a subject image based on the light received through the image sensor. In an embodiment, the lens assembly may include a first lens (e.g., the first lens L1 of FIG. 5 or 10), a second lens (e.g., the second lens L2 of FIG. 5 or 10), a third lens (e.g., the third lens L3 of FIG. 5 or 10), a fourth lens (e.g., the fourth lens L4 of FIG. 5 or 10), and a fifth lens (e.g., the fifth lens L5 of FIG. 5 or 10) sequentially aligned along an optical-axis (e.g., the optical axis O of FIG. 5 or 10) direction toward the image sensor, a first reflective surface (e.g., the area indicated by 'R2S2' or 'R3S2' of FIG. 5 or 10) disposed between an object-side surface (e.g., the surface indicated by 'L1S1' of FIG. 5 or 10) of the first lens and a sensor-side surface (e.g., the surface indicated by 'L5S2' of FIG. 5 or 10) of the fifth lens in the optical-axis direction, and a second reflective surface (e.g., the area indicated by 'R1S1' of FIG. 5, 6, or 10) disposed between the object-side surface of the first lens L1 and the first reflective surface in the optical-axis direction. In an embodiment, the electronic device may meet conditional equation 2 regarding an Abbe number V1 of the first lens and an Abbe number V4 of the fourth lens:

$$[\text{conditional equation 2}]$$

$$28 <= V1\text{-}V4 <= 42.$$

According to an embodiment, any one of the sensor-side surface (e.g., the surface indicated by 'L2S2' of FIG. 5) of the second lens or the sensor-side surface (e.g., the surface indicated by 'L3S2' of FIG. 10) of the third lens may include a first reflective area functioning as the first reflective surface and a first transmissive area surrounded by the first reflective area.

According to an embodiment, the object-side surface of the first lens may include a second reflective area functioning as the second reflective surface and a second transmissive area (e.g., the transmissive area TA of FIG. 6) disposed to surround the second reflective area. In an embodiment, the first reflective area may be configured to reflect light incident through the second transmissive area to be guided to the second reflective area, and the second reflective area is configured to reflect incident light to be guided to the first transmissive area.

According to an embodiment, the first reflective area and the first transmissive area may have different radii of curvature, and the second reflective area and the second transmissive area have different radii of curvature.

According to an embodiment, the lens assembly may have an angle of view of 15 degrees or more and 25 degrees and less.

According to an embodiment, the processor may be configured to perform focal length adjustment or focus adjustment by reciprocating at least one of a first lens, a second lens, a third lens, a fourth lens, and a fifth lens along an optical-axis direction.

According to an embodiment, the processor may be configured to perform an image stabilization operation by horizontally reciprocating at least one of the first lens, the second lens, the third lens, the fourth lens, and the fifth lens on a plane perpendicular to the optical axis.

While the disclosure has been described and shown in connection with an embodiment thereof, it should be appreciated that an embodiment is intended as limiting the invention but as illustrative. It will be apparent to one of ordinary skill in the art that various changes may be made in form and detail without departing from the overall scope of the disclosure, including the appended claims and their equivalents.

**Claims**

1. A lens assembly (400; 500), comprising:

   a plurality of lenses (L1, L2, L3, L4, L5) sequentially aligned along an optical-axis (O) direction toward an image sensor; and
   at least two reflective surfaces disposed between an object-side surface of a first lens (L1) disposed farthest from the image sensor and a sensor-side surface of a lens (L5) disposed closest to the image sensor, in the optical-axis direction,
   wherein conditional equation 1 regarding an Abbe number (V1) of the first lens and an Abbe number (V4) of a lens (L4) disposed second from the image sensor is met:

   [conditional equation 1]

   $$28 <= V1-V4 <= 42.$$

2. The lens assembly of claim 1, wherein a first reflective surface among the at least two reflective surfaces includes a first reflective area formed in any one of a sensor-side surface of a second lens (L2) disposed between the first lens and the fourth lens or a sensor-side surface of a third lens (L3) disposed between the second lens and the fourth lens.

3. The lens assembly of claim 2, wherein the first reflective area is configured to reflect incident light to be guided to the first lens.

4. The lens assembly of claim 2 or 3, wherein any one of the sensor-side surface of the second lens or the sensor-side surface of the third lens includes a first transmissive area surrounded by the first reflective area.

5. The lens assembly of claim 4, wherein the first reflective area and the second transmissive area have different radii of curvature.

6. The lens assembly of any one of claims 1 to 5, wherein a second reflective surface among the at least two reflective surfaces includes a second reflective area formed in the object-side surface of the first lens.

7. The lens assembly of claim 6, wherein the second reflective area is configured to reflect incident light to be guided in a direction toward the image sensor.

8. The lens assembly of claim 6 or 7, wherein the object-side surface of the first lens includes a second transmissive area disposed to surround the second reflective area.

9. The lens assembly of claim 8, wherein the second reflective area and the second transmissive area have different radii of curvature.

10. The lens assembly of claim 1, wherein any one of a sensor-side surface of a second lens disposed between the first lens and the fourth lens or a sensor-side surface of a third lens disposed between the second lens and the fourth lens includes a first reflective area functioning as a first reflective surface among the at least two reflective surfaces and a first transmissive area surrounded by the first reflective area,

wherein the object-side surface of the first lens includes a second reflective area functioning as a second reflective surface among the at least two reflective surfaces and a second transmissive area disposed to surround the second reflective area, and
wherein the first reflective area is configured to reflect light incident through the second transmissive area to be guided to the second reflective area, and the second reflective area is configured to reflect incident light to be guided to the first transmissive area.

11. The lens assembly of claim 10, wherein the first reflective area and the first transmissive area have different radii of curvature, and the second reflective area and the second transmissive area have different radii of curvature.

12. The lens assembly of any one of claims 1 to 11, wherein the lens assembly has an angle of view of 15 degrees or more and 25 degrees and less.

13. The lens assembly of any one of claims 1 to 12, wherein at least one of the plurality of lenses is configured to reciprocate along the optical-axis direction.

14. An electronic device comprising the lens assembly of any one of claims 1 to 13, further comprising:

an image sensor (I) configured to receive light focused or guided by the lens assembly; and
a processor (120; 260) configured to obtain a subject image based on the light received through the image sensor.

15. The electronic device of claim 14, wherein the processor is configured to:

perform focal length adjustment or focus adjustment by reciprocating at least one of a first lens, a second lens, a third lens, a fourth lens, and a fifth lens along an optical-axis direction, or
perform an image stabilization operation by horizontally reciprocating at least one of the first lens, the second lens, the third lens, the fourth lens, and the fifth lens on a plane perpendicular to the optical axis.

FIG. 1

EP 4 592 727 A1

FIG. 2

FIG. 3

FIG. 4

**FIG. 5**

**FIG. 6**

LONGITUDINAL
SPHERICAL ABER.

| | 656.2725 NM |
| --- | --- |
| | 587.5618 NM |
| | 546.0740 NM |
| | 486.1327 NM |
| | 435.8343 NM |

FIG. 7

ASTIGMATIC
FIELD CURVES

DISTORTION

S T IMG HT
2.20

1.65

1.10

0.55

-0.200 -0.100 0.0 0.100 0.200
FOCUS (MILLIMETERS)

IMG HT
2.20

1.65

1.10

0.55

-5.0 -2.5 0.0 2.5 5.0
% DISTORTION

FIG. 8

FIG. 9

FIG. 10

LONGITUDINAL
SPHERICAL ABER.

| | |
|---|---|
| —————— | 656.2725 NM |
| - - - - - - | 587.5618 NM |
| —————— | 546.0740 NM |
| ················ | 486.1327 NM |
| —— - —— | 435.8343 NM |

1.00

0.75

0.50

0.25

-0.200  -0.150  -0.0  0.0  0.150  0.200
FOCUS (MILLIMETERS)

# FIG. 11

ASTIGMATIC
FIELD CURVES

## FIG. 12

DISTORTION

## FIG. 13

## INTERNATIONAL SEARCH REPORT

| | International application No. |
|---|---|
| | **PCT/KR2023/014786** |

### A. CLASSIFICATION OF SUBJECT MATTER

**G02B 13/00**(2006.01)i; **G02B 3/00**(2006.01)i; **G02B 17/02**(2006.01)i; **G02B 7/09**(2006.01)i; **G02B 5/08**(2006.01)i; **G02B 9/60**(2006.01)i; **G02B 3/02**(2006.01)i

According to International Patent Classification (IPC) or to both national classification and IPC

### B. FIELDS SEARCHED

Minimum documentation searched (classification system followed by classification symbols)

G02B 13/00(2006.01); G02B 13/04(2006.01); G02B 13/06(2006.01); G02B 13/18(2006.01); G02B 17/08(2006.01); G03B 17/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제5 렌즈(fifth lens), 반사면(reflective surface), 투과면(transmissive surface), 아베수(abbe's Number), 프로세서(processor), 화각(field of view, FOV), 곡률 반경(radius of curvature)

### C. DOCUMENTS CONSIDERED TO BE RELEVANT

| Category* | Citation of document, with indication, where appropriate, of the relevant passages | Relevant to claim No. |
|---|---|---|
| X | JP 11-316343 A (NIKON CORP.) 16 November 1999 (1999-11-16)<br>See paragraphs [0003], [0017], [0019], [0023] and [0027] and figures 5 and 13. | 1-4,6-8,10,13-15 |
| A | | 5,9,11-12 |
| A | CN 113933975 A (JIANGXI JINGCHAO OPTICS CO., LTD.) 14 January 2022 (2022-01-14)<br>See paragraphs [0051]-[0055] and figure 1. | 1-15 |
| A | KR 10-2022-0047742 A (SAMSUNG ELECTRO-MECHANICS CO., LTD.) 19 April 2022 (2022-04-19)<br>See paragraphs [0071]-[0076] and figure 7. | 1-15 |
| A | KR 10-2013-0037883 A (ITI CO., LTD.) 17 April 2013 (2013-04-17)<br>See paragraphs [0041]-[0053] and figures 2-3. | 1-15 |
| A | CN 113740999 A (HUAWEI TECHNOLOGIES CO., LTD.) 03 December 2021 (2021-12-03)<br>See paragraphs [0273]-[0292] and figure 25. | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2024** | **09 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/014786**

| Patent document cited in search report | | | Publication date (day/month/year) | Patent family member(s) | | | Publication date (day/month/year) |
|---|---|---|---|---|---|---|---|
| JP | 11-316343 | A | 16 November 1999 | US | 6169637 | B1 | 02 January 2001 |
| CN | 113933975 | A | 14 January 2022 | CN | 113933975 | B | 17 May 2022 |
| KR | 10-2022-0047742 | A | 19 April 2022 | CN | 114200641 | A | 18 March 2022 |
| | | | | CN | 214895984 | U | 26 November 2021 |
| | | | | KR | 10-2022-0037775 | A | 25 March 2022 |
| | | | | KR | 10-2409108 | B1 | 15 June 2022 |
| | | | | TW | 202212887 | A | 01 April 2022 |
| | | | | TW | 202246831 | A | 01 December 2022 |
| | | | | TW | I776385 | B | 01 September 2022 |
| | | | | US | 2022-0091372 | A1 | 24 March 2022 |
| KR | 10-2013-0037883 | A | 17 April 2013 | KR | 10-1653846 | B1 | 02 September 2016 |
| | | | | US | 10073253 | B2 | 11 September 2018 |
| | | | | US | 2016-0274337 | A1 | 22 September 2016 |
| | | | | WO | 2013-051744 | A1 | 11 April 2013 |
| CN | 113740999 | A | 03 December 2021 | CN | 113740999 | B | 10 February 2023 |
| | | | | EP | 4148479 | A1 | 15 March 2023 |
| | | | | EP | 4148479 | A4 | 08 November 2023 |
| | | | | JP | 2023-527070 | A | 26 June 2023 |
| | | | | KR | 10-2023-0012633 | A | 26 January 2023 |
| | | | | US | 2023-0087877 | A1 | 23 March 2023 |
| | | | | WO | 2021-238945 | A1 | 02 December 2021 |

Form PCT/ISA/210 (patent family annex) (July 2022)